# EUROPEAN PATENT APPLICATION

(11) **EP 4 703 920 A1**
(43) Date of publication of application: **04.03.2026**
(21) Application number: 24196670.4
(22) Date of filing: 27.08.2024
(51) Int. Cl.: G06F 18/232, G06N 20/00, H04L 41/08

(54) **VECTOR CLUSTERING ALGORITHM**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A computer-implemented method of clustering a plurality of vectors, the computer-implemented method comprising:
sorting the plurality of vectors by cosine distance from an origin vector to generate an ordered circular list; and
dividing the ordered circular list into a plurality of ordered list fragments, each ordered list fragment consisting of one or more vectors, thereby generating a solution in which the one or more vectors constituting each of the plurality of ordered list fragments are assigned to a respective one of a corresponding plurality of vector clusters.

## Description

### FIELD

The present disclosure relates to clustering algorithms, for example for use in categorisation of cybersecurity threat reports or telecommunications network operation reports to inform network configuration actions.

More specifically, aspects relate to: a computer-implemented method of clustering a plurality of vectors; a computer-implemented method of training a machine learning model; such a machine learning model; a computer-implemented method of configuring a network; data processing systems configured to perform the aforementioned methods, computer programs comprising instructions which, when the programs are executed by computers, cause the computers to carry out the aforementioned methods, computer-readable data carriers having such computer programs stored thereon, and data carrier signals carrying such computer programs.

### BACKGROUND

Large quantities of data are increasingly available to help inform technical decisions. For example, at present around 3000 cybersecurity threat reports are issued per month; far more than a human cybersecurity analyst can realistically read. Similarly unwieldy quantities of telemetry data are generated from telecommunications networks.

Machine learning (ML) models have been developed to augment and, in some cases, replace manual data analysis and responsive action tasks. However, such models often require labelled training data, which is time-consuming to label manually.

Vector embedding is an ML technique which transforms a data set into a set of vectors consisting of real numbers. The reason for this process is to allow a machine to represent a meaning of a data point in relation to other data points. Unlike a human, a machine does not know the meaning of a data point such as a word or document, but it can work with vector representations of data points to represent their meanings. In general, vector embeddings can be generated from the hidden layers of a neural network, or from the output of the middle layer of a neural network. For example, one method of converting words into vectors is known as 'Word2Vec'. Word2Vec is a collection of models for representing words in a corpus of text as a collection of vectors denoting how similar they are to each other depending on sentence context. It involves training a neural network to associate words with each other depending on where they lie within a context. The neural network itself (specifically its weight matrix) is the word embedding and it can be used to predict the context of a given word which appeared in the corpus.

Clustering algorithms, which in some cases make use of vector embeddings, can assist with the abovementioned problems by grouping data into meaningful categories. For example, tens of cybersecurity threat reports may all relate to the same novel malware, so that there is considerable information redundancy between those reports. However, many existing clustering algorithms use gradient descent to find maxima or minima, making them highly sensitive to an initial placement of cluster centres. Many clustering algorithms also suffer from the curse of dimensionality, making them slow to converge. This makes them unsuitable for use in time-constrained scenarios such as reconfiguring a computer network to thwart a novel malware threat, reconfiguring a telecommunications network to reduce quality of service losses caused by traffic fluctuations, and real-time control of drones or other robotic systems.

What is needed is an approach to data clustering which at least alleviates some of the abovementioned problems.

### SUMMARY

According to a first aspect, there is provided a computer-implemented method of clustering a plurality of vectors, the computer-implemented method comprising:
sorting the plurality of vectors by cosine distance from an origin vector to generate an ordered circular list; and
dividing the ordered circular list into a plurality of ordered list fragments, each ordered list fragment consisting of one or more vectors, thereby generating a solution in which the one or more vectors constituting each of the plurality of ordered list fragments are assigned to a respective one of a corresponding plurality of vector clusters.

The computer-implemented method can further comprise:
after sorting the plurality of vectors, determining a distance between each of the plurality of vectors and a next one of the plurality of vectors in the ordered circular list;
wherein the dividing is performed to generate *K* ordered list fragments by positioning fragment boundaries to correspond to a top *K* of the determined distances.

The computer-implemented method can further comprise determining K based on a statistical measure of the distances' distribution.

The statistical measure can be a skewness ratio.

The computer-implemented method can further comprise:
determining K based on a total number of topics the plurality of vectors are identified as relating to.

K can be determined based on a conditional probability of a number of peaks identified in the distances' distribution being equal to a true number of categories of the plurality of vectors, given the total number of topics.

The computer-implemented method can further comprise determining K based on:
a skewness ratio of the distances' distribution, and
a conditional probability of a number of peaks identified in the distances' distribution being equal to a true number of categories of the plurality of vectors, given a total number of topics the plurality of vectors are identified as relating to.

The computer-implemented method can further comprise:
i. adopting the solution generated by the step of dividing the ordered circular list into a plurality of ordered list fragments as an initial current solution;
ii. obtaining a fitness metric of the current solution;
iii. selecting a next cluster of the plurality of vector clusters;
iv. generating a candidate solution based on the current solution by reassigning an outermost vector of the selected cluster to the cluster of the plurality of vector clusters containing the vector of the plurality of vector clusters other than the selected cluster with the shortest distance from that outermost vector;
v. determining a fitness metric of the candidate solution;
vi. comparing the fitness metric of the candidate solution to the fitness metric of the current solution;
vii-a. when that comparison indicates the current solution to be at least as fit as the candidate solution, retaining the current solution; and
vii-b. when that comparison indicates the candidate solution to be fitter than the current solution, adopting the candidate solution as a revised current solution; then
viii-a. when all clusters of the current solution have been selected, or another termination criterion is met, outputting the current solution;
viii-b. otherwise, returning to step ii.

Step iv can comprise:
iv-a. identifying an outermost vector of the selected cluster;
iv-b. identifying a vector of a vector cluster of the plurality of vector clusters other than the selected cluster with the shortest distance from the outermost vector; and
iv-c. reassigning the outermost vector to the cluster containing the vector identified in step iv-b.

The fitness metric can be determined from a sum of the distances between each vector and a representative vector of the cluster that vector is assigned to, wherein a lower fitness metric indicates a fitter solution. Alternatively or additionally, the fitness metric can be based on one or more of: a silhouette coefficient, a between-cluster distance (BC) metric, a within-cluster sum of squares (WCSS), and a mean average distance (MAD) function.

The representative vector for a cluster can be the closest vector of the cluster to the centroid of the cluster (the geometric mean of all the vectors in the cluster). Alternatively, the representative vector for a cluster can be the centroid itself (which may or may not be one of the vectors assigned to the cluster), or the medoid of the cluster (the vector of the cluster whose sum of distances from all of the other vectors of the cluster is minimal).

Any cluster of the current solution whose assigned vectors have not changed for a predetermined threshold number of past iterations since a latest adoption of a current solution can be considered to have already been selected in any future iterations for which that current solution remains adopted.

Step iii can further comprise determining the outermost vector of the selected cluster as the vector of the selected cluster having the greatest distance from a representative vector of the selected cluster.

The computer-implemented method can further comprise:
outputting a representative vector for each cluster of the output solution.

The plurality of vectors can be based on vector embeddings of text documents.

The text documents can be cybersecurity threat reports.

The plurality of vectors can relate to network security and/or management.

According to a second aspect, there is provided a computer-implemented method of training a machine learning model, the computer-implemented method comprising:
performing the method of any preceding claim; and
training a machine learning model using the output solution as training data.

According to a third aspect, there is provided a machine learning model trained according to the method of the second aspect.

According to a fourth aspect, there is provided a computer-implemented method of configuring a network, the computer-implemented method comprising:
performing the method of the first aspect, wherein the plurality of vectors relate to network security and/or management;
determining a network configuration action based on the solution output by said method; and
causing the network configuration action to be performed.

The determining of the network configuration action can be performed using the machine learning model of the third aspect.

According to a fifth aspect, there is provided a data processing system configured to perform the method of any of the first, second, or fourth aspects.

According to a sixth aspect, there is provided a computer program comprising instructions which, when the program is executed by a computer, cause the computer to carry out the method of any of the first, second, or fourth aspects.

According to a seventh aspect, there is provided a computer-readable data carrier having stored thereon the computer program of the sixth aspect.

According to an eighth aspect, there is provided a data carrier signal carrying the computer program of the sixth aspect.

### BRIEF DESCRIPTION OF THE FIGURES

Aspects of the present disclosure will now be described by way of example with reference to the accompanying figures. In the figures:
Figure 1 is a flowchart illustrating an example cluster assignment method;
Figure 2 is a flowchart illustrating an example method for determining a suitable number of clusters;
Figure 3 is a flowchart illustrating an example method for finding representative vectors of clusters;
Figure 4 is a flowchart illustrating an example method for evaluating the fitness of a vector clustering solution;
Figure 5 is a flowchart illustrating an example method for preparing a next candidate solution;
Figure 6 is a flowchart illustrating an example method for controlling iteration of Figures 3 to 5;
Figure 7 is a flowchart illustrating an example computer-implemented method of clustering a plurality of vectors;
Figure 8 is a flowchart illustrating an example computer-implemented method of iteratively clustering a plurality of vectors;
Figure 9 is a flowchart illustrating an example computer-implemented method 900 of training an ML model;
Figure 10 is a flowchart illustrating an example computer-implemented method of configuring a network;
Figure 11 schematically illustrates an example data processing system;
Figure 12 is a component diagram of an example ML module; and
Figure 13 schematically illustrates an example restricted Boltzmann machine.

### DETAILED DESCRIPTION

Clustering algorithms are presented herein which cluster data records into categories, and which can identify a representative data record for each category. The data records can for example be cybersecurity threat reports or telecommunications network operation reports and the algorithms presented herein can be used to inform network configuration actions. Vector embedding is employed to represent each data record as a vector, then the vectors are clustered.

One approach to vector clustering presented herein is to form clusters by chopping up a list of vectors ordered according to their distances from an origin vector. This results in a solution which is a good estimation of the 'true' clusters, arrived at very rapidly with very low resource expenditure. ('True' is in inverted commas, since there can be multiple ways to cluster data sets which a human might consider valid.) Another approach is iterative, wherein a current solution is tested by comparing its fitness to that of a candidate solution in which, for a given cluster, an outermost vector is reassigned to the cluster containing the extra-cluster vector with the shortest distance from that outermost vector. An initial solution used in an algorithm according to the latter approach can be a solution output by an algorithm according to the former approach. In this way, the latter approach can refine the solution of the former. Such a combined approach can for example operate as follows.

*N* data records, such as unstructured text documents (e.g. cybersecurity threat reports), are vector embedded to generate *N* vectors. The vectors are put into an ordered list according to their cosine distance *D* from an origin vector. *K* initial clusters are then formed such that each cluster contains vectors which point in similar directions. This can be done in a number of ways, one being based on the Δ*D* between adjacent list entries, so that cluster boundaries are formed where that delta is highest.

*K* can be predetermined, or can be tailored to the distribution of vector directions using a threshold on Δ*D*. Such a threshold can be a predetermined delta value, based on a predetermined value (e.g. 20% higher than the mean Δ*D*), or entirely based on the present data (e.g. calculated by multiplying together the number of peaks in the distribution of deltas, the skewness ratio of the distribution of deltas, and the conditional probability of the number of peaks being equal to a true number of categories of the text documents, given a number of unique topics in the unstructured text documents found via topic modelling).

Iteration then proceeds as follows. For each cluster, the average of all the values of *D* is calculated and the vector of the cluster with the value of *D* closest to that average is selected as the cluster's representative vector. The fitness of the current solution is calculated as the sum of the cosine distances between each vector and its cluster's representative vector, over all vectors (the algorithm's objective being to minimise that sum). Then, for a first cluster, the outermost vector (i.e., the vector of the cluster with the greatest cosine distance from the representative vector) is reassigned to the cluster containing the extra-cluster vector with the shortest cosine distance from that outermost vector. The fitness of this candidate solution is calculated. If the candidate solution is not fitter than the current solution, then the next cluster of the current solution is tested, and so on until all clusters of the current solution have been tested. If at any point a candidate solution is fitter than the current solution, the candidate solution is adopted as a revised current solution (with revised representative vectors for the revised clusters), whose clusters are then tested in turn.

If a cluster's members do not change for a predetermined number of iterations (wherein the iteration count resets each time a candidate solution is adopted as a revised current solution), that cluster can be fixed to remove its member vectors from consideration in future iterations, reducing the time to convergence.

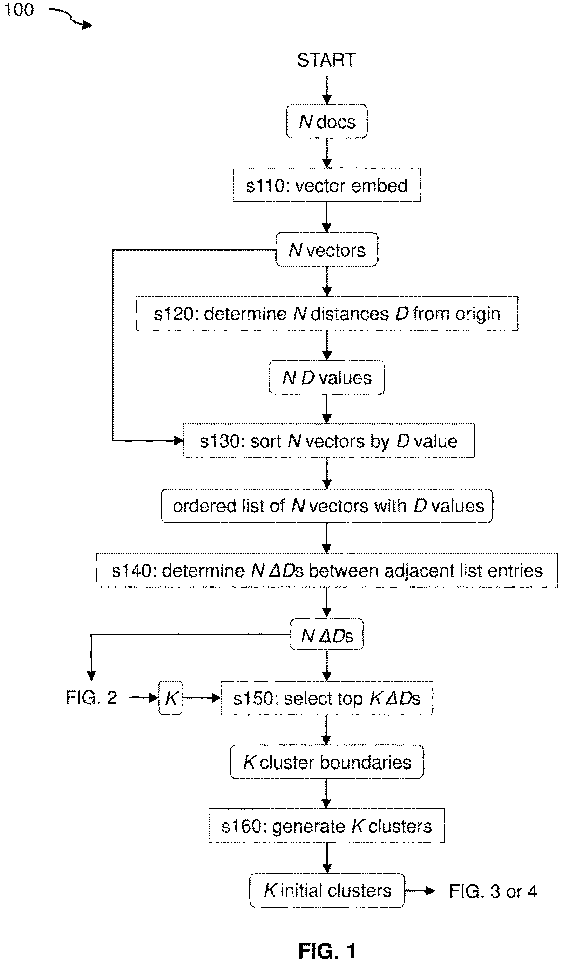

Figures 1 to 6 are flowcharts detailing one example of the above-described approach to data clustering. The methods 100 to 600 of Figures 1 to 6 can be implemented together to provide an overall clustering solution. Alternatively, one or more of the methods can be implemented without the others, with any omitted methods being substituted by alternative methods.

Figure 1 is a flowchart illustrating an example cluster assignment method 100.

At step s110 *N* documents are vector embedded to produce *N* vectors. Any known document embedding technique can be employed for the embedding described herein, for example TF-IDF (Term Frequency - Inverse Document Frequency) or Doc2Vec. A dimensionality reduction technique such as PCA (Principal Component Analysis) can optionally be applied to reduce memory requirements.

At step s120 the cosine distance *D* of each of the *N* vectors from an arbitrary origin vector is determined. Other measures of vector similarity could be used, for example Euclidean distance. However, cosine similarity captures the semantic similarity between text documents well, regardless of the specific words used. In particular, cosine distance indicates similarity in the direction of vectors, ignoring their magnitudes. This is particularly useful for comparing the semantic content of unstructured text documents without any impact from their length. In addition, using the cosine distance avoids the curse of dimensionality, where the Euclidean distance between points becomes less meaningful. Cosine similarity is also robust to noise from commonly used terms, making it particularly suitable for use in categorisation of text documents.

The *N* vectors are sorted by their associated *D* values at step s130. This sorting can be in either ascending or descending order. Step s130 results in an ordered circular list. This list is 'circular' in the sense that the arbitrary choice of origin means that the list wraps around, with the last vector in the list having a Δ*D* from the first vector in the list which is smaller than its Δ*D* from any other vector in the list, except (in some cases) its Δ*D* from the penultimate vector in the list.

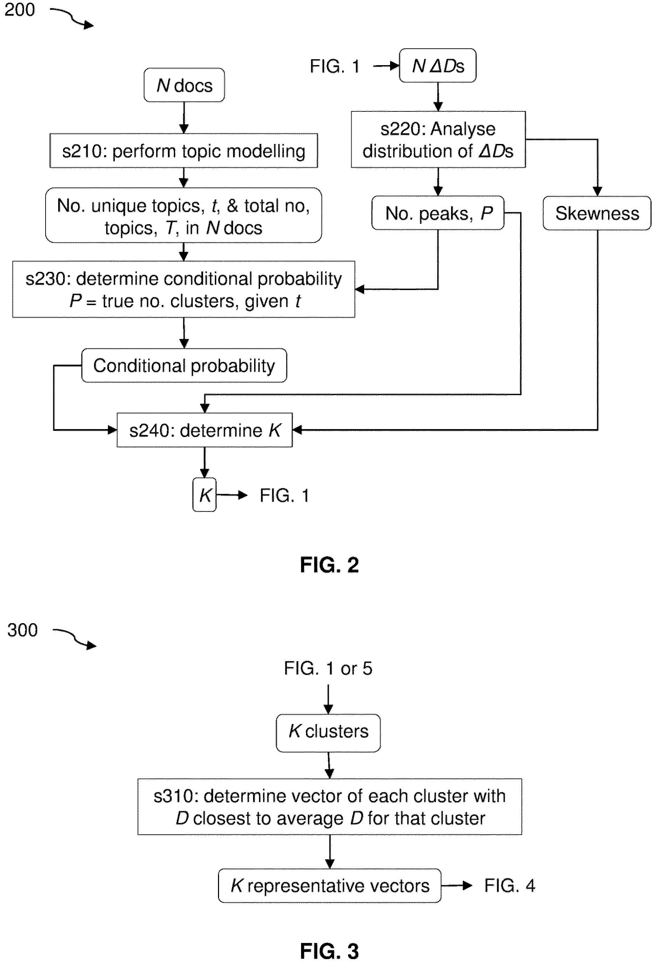

At step s140 the *N* Δ*D*s between adjacent list entries (including between the last and first entries in the list) are determined. The top (i.e. largest) *K* ΔDs are selected at step s150, resulting in generation of *K* corresponding cluster boundaries. *K* can be predetermined, or determined based on the data to be categorised, for example as explained in relation to Figure 2 below. *K* clusters are then generated at step s160 by assigning all vectors between each pair of adjacent cluster boundaries in the ordered circular list to a respective cluster.

The method 100 of Figure 1 generates *K* clusters of vectors such that each cluster contains vectors pointing in similar directions to one another, with cluster boundaries occurring where the largest *K* directional differences between adjacent vectors in the distribution of vectors are found.

Figure 2 is a flowchart illustrating an example method for determining a suitable (initial) number of clusters, *K*. This can for example be used as an input to step s150 of Figure 1, or to any other clustering method which requires (initial) number of clusters as a parameter.

At step s210, topic modelling is performed on the *N* documents to be categorised to estimate a total number of topics *T* which they relate to, and a number of unique topics *t* which they relate to (where topics will generally be at a more granular level than the categorisation provided by clustering, since documents in a particular category are likely to contain information relating to multiple similar topics). Step s210 can be performed according to any suitable known technique, such as based on Latent Dirichlet Allocation (LDA) coupled with Jensen-Shanon similarity, Jaccard Similarity, Kullback-Leibler (KL) divergence, or Pearson Correlation Coefficient.

A distribution of *N* Δ*D*s, for example as produced at step s140 of Figure 1, is analysed at step s220 to determine a number of peaks *P* in that distribution, providing an estimate of the true number of clusters. This can for example be achieved by normalising the Δ*D* values to smooth the distribution, plotting the normalised Δ*D*s, then finding the number of peaks in that plot. Normalisation can for example be performed by subtracting the minimum Δ*D* from each Δ*D*, then dividing the result of that subtraction by the difference between the maximum and minimum Δ*D*s. 'Plotting' does not necessarily require rendering of an image for display to a human, instead referring to any manipulation of the normalised Δ*D*s which permits automatic recognition of peaks in the distribution of normalised Δ*D*s by any known means. Peak recognition can equate to identification of all maxima in the distribution of Δ*D*s, or to identification of only 'significant' maxima, for example as determined by smoothing the distribution using the normalisation described above, and/or any other known technique (e.g. Moving Average, Gaussian Filter, or Savitzky-Golay Filter), then identifying maxima in the smoothed distribution. In some implementations, *P* could be used as *K*. This would be more computing resource-efficient, but less accurate, than the full method shown in Figure 2.

At step s230 the conditional probability that *P* is the true number of clusters, given *t*, is determined as the number of peaks in the normalised distribution of Δ*D*s, (i.e., *P*) multiplied by the number of unique topics identified (*t*), divided by the total number of topics identified (*T*).

The analysis performed at step s220 further comprises determining a skewness of the distribution of Δ*D*s, for example as a ratio of the mean Δ*D* to the median Δ*D*. A skewness ratio of around 1 indicates a symmetrical distribution; i.e. multiple clusters of vectors of approximately equal size. A higher skewness ratio indicates a right-skewed distribution; i.e. there are a number of very large Δ*D*s, suggesting a higher number of clusters. A lower skewness ratio indicates a left-skewed distribution; i.e. the Δ*D*s are all small, suggesting a lower number of clusters.

At step s240, *K* is determined from the number of peaks determined at step s220, the conditional probability determined at step s230, and the skewness determined at step s220, for example by multiplying them all together.

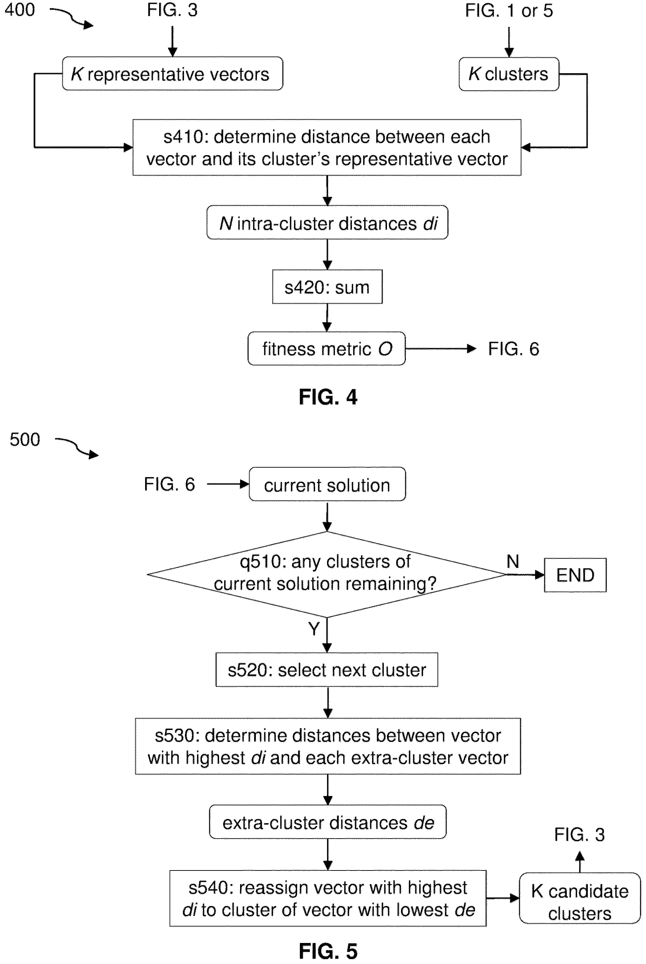

Figure 3 is a flowchart illustrating an example method for finding representative vectors of clusters, for example as output by step s160 of Figure 1, or step s540 of Figure 5 (described below). It consists of determining the vector of each of the *K* clusters with an associated *D* value closest to the average *D* for that cluster at step s310.

Figure 4 is a flowchart illustrating an example method 400 for evaluating the fitness of a vector clustering solution. This method takes as input *K* representative vectors, for example as output by step s310 of Figure 3, together with *K* clusters, for example as output by step s160 of Figure 1, or step s540 of Figure 5 (described below). At step s410 the cosine distance *di* between each vector and its cluster's representative vector is determined. The resulting *N dis* are then summed at step s420 to produce a fitness metric *O*, where a lower *O* value indicates a fitter solution.

Figure 5 is a flowchart illustrating an example method 500 for preparing a next candidate solution. It takes as input a current clustering solution consisting of *K* clusters, each having a representative vector, for example as respectively output by step s160 of Figure 1 and step s310 of Figure 3.

At query q510 it is determined whether any clusters of the current solution remain to be considered. If not, the process ends. (Query q510 could optionally also test for one or more other termination criteria, for example elapse of a maximum period from the start of the process, a predetermined stopping time having been reached, or a maximum number of iterations having been completed.) If query q510 is answered in the affirmative, the next cluster is selected at step s520. Then, at step s530, the vector of that cluster with the highest *di* value is identified, and the cosine distances de between that vector and each extra-cluster vector (i.e. each of the vectors which, according to the current solution, belong to a different cluster) are determined. The vector with the highest *di* value is then reassigned to the cluster of the vector associated with the lowest de value at step s540. This results in *K* candidate clusters, which differs from the *K* current clusters by the assignment of one vector to a different cluster.

The *K* candidate clusters output by step s540 of Figure 5 can be input to step s310 of Figure 3 to produce *K* candidate representative vectors. The *K* candidate clusters output by step s540 of Figure 5 and the *K* candidate representative vectors output by step s310 of Figure 3 can then be input to step s410 of Figure 4 to produce a candidate fitness metric *O*.

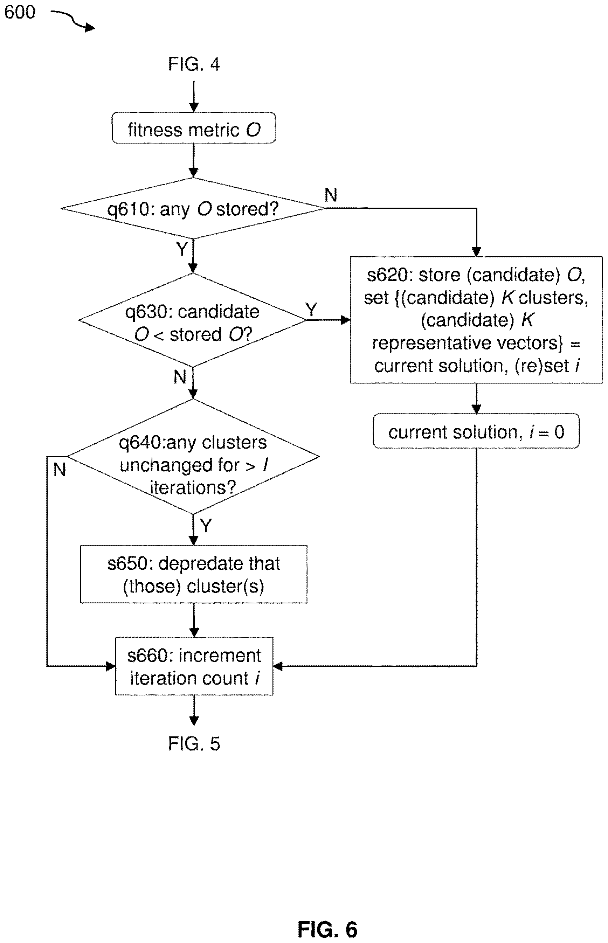

Figure 6 is a flowchart illustrating an example method 600 for controlling iteration of Figures 3 to 5.

At query q610 it is determined whether any *O* value is already stored. If not (i.e. on the first iteration of the method 600) the fitness metric *O* output by step s420 of Figure 4 is stored, and the *K* clusters output by step s160 of Figure 1 together with the *K* representative vectors output by step s310 of Figure 3 are set as the current solution. An iteration counter *i* is also set to zero. It is immediately incremented to 1 at step s660, then the flow proceeds to Figure 5 to generate *K* candidate clusters, then to Figure 3 to generate *K* representative vectors, then to Figure 4 to determine a candidate fitness metric *O*. The process then returns to Figure 6.

For second and subsequent iterations, query q610 (as to whether any *O* value is stored) is answered in the affirmative. The flow then proceeds to query q630 where it is determined whether the candidate *O* is less than the stored *O*. If so, then the flow proceeds to step s620, where the currently stored *O* and current solution are overwritten by the candidate *O* and candidate solution, and the iteration counter is reset to zero. The flow then proceeds through step s660 to Figure 5 again.

If the candidate *O* is found not to be less than the stored *O* at query q630, this indicates that the current solution is fitter than the candidate solution, so the candidate solution is not adopted - the current solution remains the adopted solution. It is then determined at query q640 whether any clusters have remained unchanged for greater than a predetermined number *I* of iterations. If not, the flow proceeds back to Figure 5, via incrementation of the iteration count *i* at step s660, to generate the next candidate solution (or terminate the process, if convergence has been achieved, or another termination criterion is satisfied). If so, before the flow returns to Figure 5 that/those static clusters are depredated at step s650, i.e. marked as already selected in further iterations of step s520 for the current solution.

Iteration proceeds in this manner until a termination criterion is satisfied.

Performance of the clustering algorithm described above in relation to Figures 1 to 6 has been tested against the well-known K-Means clustering algorithm on a Kaggle ground truth dataset that includes labelled BBC (British Broadcasting Cooperation) news articles from five different categories. Vector embeddings used TF-IDF and dimensionality reduction was achieved using PCA in all cases. Table 1 shows the results.

**Table 1**

| **Method** | **V-measure** | **Execution time /s** |
|---|---|---|
| K-Means | 0.42 | 19.2200 |
| Fig. 1 | 0.30 | 0.0001 |
| K-Means initialised with Fig. 1 | 0.56 | 12.2300 |
| Proposed combined algorithm | 0.62 | 7.4000 |

V-measure is a metric used to evaluate the quality of clustering results by taking into account both homogeneity and completeness. (Homogeneity is a metric used to measure the extent to which each cluster contains data points of a single category. Completeness is a metric used to measure the extent to which all data points from a category are assigned to the same cluster.) V-measure combines these two measures into a single score based on their harmonic mean, thus providing a balanced evaluation of clustering performance which gives equal weight to both homogeneity and completeness. As can be seen from Table 1, the non-iterative solution provided by the method of Figure 1 performed a little worse than K-Means according to V-measure, but completed in a tiny fraction of the time. Both the performance and the execution time of K-Means was improved when initialised with the solution produced by the method of Figure 1. The proposed combined algorithm outperforms both traditional K-Means, and K-Means initialised with the solution produced by the method of Figure 1, on V-measure and execution time.

The results of table 1 were achieved with a purely software-based implementation. To further increase speed and enhance hardware security, FPGAs (field programmable gate arrays) could be used together with a CPU (central processing unit) in a software-hardware co-design. Assigning different calculations to different CLBs (configurable logic blocks) of the FPGA can allow them to be completed at least partially simultaneously. This could for example allow evaluation of fitness metrics and generation of new candidate solutions to be performed in parallel, and/or calculations relating to multiple clusters of a solution to be performed in parallel. The sequential steps where intermediary variables are updated at the end of each iteration could be completed in the CPU.

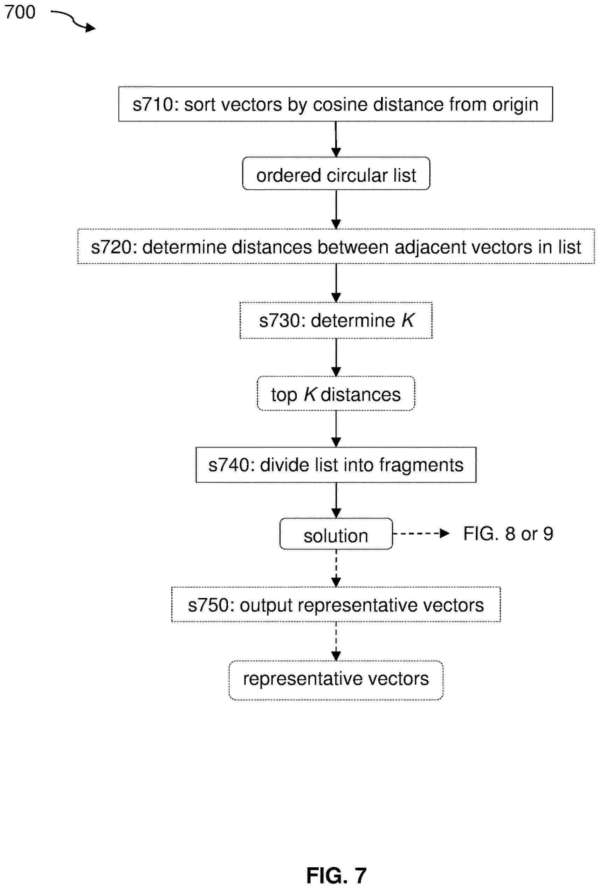

Figures 7 to 10 illustrate some example methods according to the present disclosure, in terms which emphasise the conceptual approach over the implementation details.

Figure 7 is a flowchart illustrating an example computer-implemented method 700 of clustering a plurality of vectors. At step s710, the plurality of vectors are sorted by cosine distance from an origin vector to generate an ordered circular list. That ordered circular list is then divided into a plurality of ordered list fragments at step s740, each ordered list fragment consisting of one or more vectors, thereby generating a solution in which the one or more vectors constituting each of the plurality of ordered list fragments are assigned to a respective one of a corresponding plurality of vector clusters.

The computer-implemented method 700 can optionally further comprise outputting a representative vector for each cluster of the output solution at step s750.

Optionally, after sorting the plurality of vectors at step s710, a distance between each of the plurality of vectors and a next one of the plurality of vectors in the ordered circular list can be determined at step s720. The dividing of step s740 can then be performed to generate K ordered list fragments by positioning fragment boundaries to correspond to a top K of the determined distances. The computer-implemented method 700 can further comprise determining K at optional step s730. This can for example be based on a statistical measure of the distances' distribution (e.g. its skewness ratio). Optional step s730 can alternatively or additionally comprise determining *K* based on a total number of topics the plurality of vectors are identified as relating to. For example, *K* can be determined based on a conditional probability of a number of peaks identified in the distances' distribution being equal to a true number of categories of the plurality of vectors, given the total number of topics.

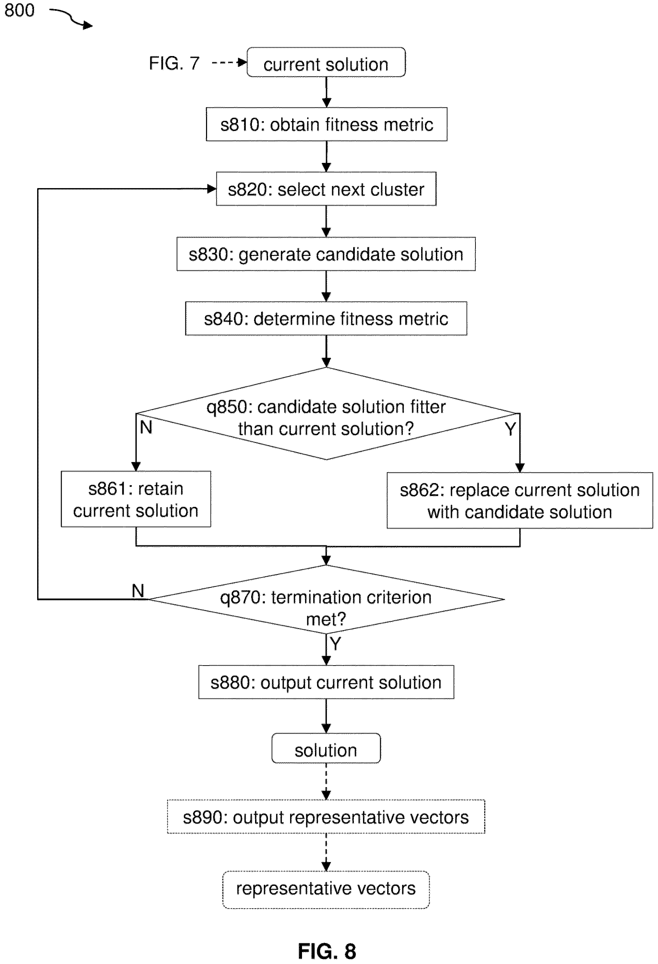

Figure 8 is a flowchart illustrating an example computer-implemented method 800 of iteratively clustering a plurality of vectors.

At step s810 a fitness metric of a current solution comprising a plurality of vector clusters is obtained. That current solution can for example be obtained via the method 700 of Figure 7.

A next cluster of the plurality of vector clusters is then selected at step s820. A candidate solution is then generated at step s830 based on the current solution, by reassigning an outermost vector of the selected cluster to the cluster of the plurality of vector clusters containing the vector of the plurality of vector clusters other than the selected cluster with the shortest distance from that outermost vector. The outermost vector of the selected cluster can for example be defined as the vector of the selected cluster having the greatest distance from a representative vector of the selected cluster. Alternatively, the outermost vector of the selected cluster can be defined as the vector of the selected cluster having the greatest distance from the centroid of the cluster (the geometric mean of all the vectors in the cluster). Alternatively, the outermost vector of the selected cluster can be defined as the 'anti-medoid' of the cluster (the vector of the cluster whose sum of distances from all of the other vectors of the cluster is maximal), or in some other way.

A fitness metric of the candidate solution is determined at step s840. The fitness metric of the candidate solution is then compared to the fitness metric of the current solution at query q850. When that comparison indicates the current solution to be at least as fit as the candidate solution, the current solution is retained at step s861. When that comparison indicates the candidate solution to be fitter than the current solution, the current solution is replaced with the candidate solution at step s862. In some implementations the candidate solution could replace the current solution if they are both equally fit. This reduces the risk of converging on a local minimum value of *O*, as opposed to the global minimum value (which is the value we seek to converge on). However, retaining the current solution when it is equally fit as the candidate solution is likely to decrease computing resources required to reach convergence. This is therefore generally preferable when the time available is constrained.

Query q870 tests whether any termination criterion has been met. When all clusters of the current solution have been selected, or another termination criterion is met (e.g. maximum process time or number of iterations reached), the current solution is output at step s880. Otherwise, the flow returns to step s820 to select the next cluster.

The computer-implemented method 800 can optionally further comprise outputting a representative vector for each cluster of the output solution at step s890.

The fitness metric can be determined at step s840 from a sum of the distances between each vector and a representative vector of the cluster that vector is assigned to, wherein a lower fitness metric indicates a fitter solution. Alternatively or additionally, the fitness metric can be based on one or more of: a silhouette coefficient, a between-cluster distance (BC) metric, a within-cluster sum of squares (WCSS), and a mean average distance (MAD) function.

The representative vector for a cluster can be the closest vector of the cluster to the centroid of the cluster (the geometric mean of all the vectors in the cluster). Alternatively, the representative vector for a cluster can be the medoid of the cluster (the vector of the cluster whose sum of distances from all of the other vectors of the cluster is minimal).

Step s820 can optionally be operated such that any cluster of the current solution whose member vectors have not changed for a predetermined threshold number of past iterations (i.e. operations of step s860) is considered to have already been selected in any future iterations. This avoids resources (such as time, memory, and power) being expended on consideration of refinements to clusters which can already be assumed to be close to the state they would be in on convergence of a version of the method which does not depredate clusters in this way.

In the methods 700, 800 of Figures 7 and 8, the plurality of vectors can be based on vector embeddings of text documents, for example cybersecurity threat reports, or telemetry reports e.g. for a telecommunications network or robotic systems such as drones.

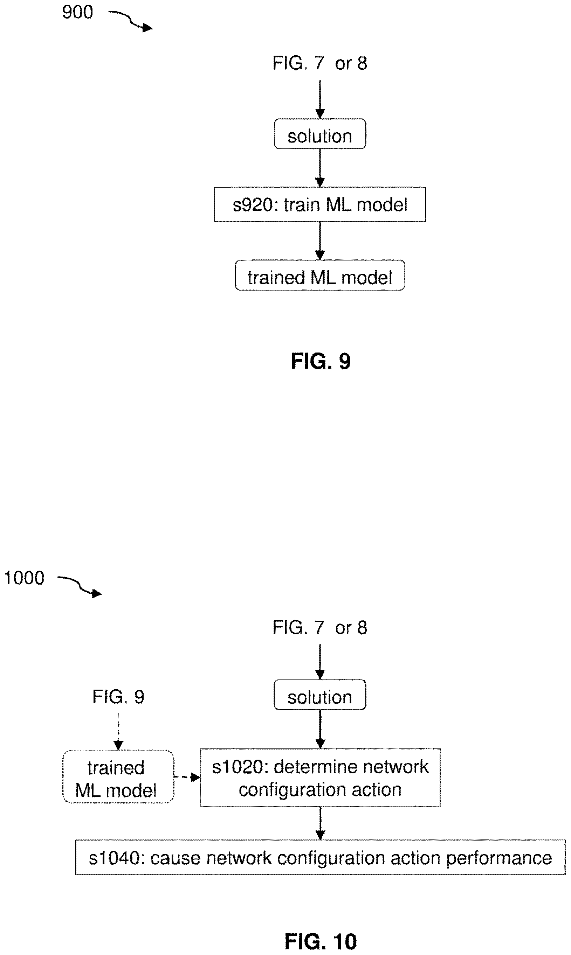

Figure 9 is a flowchart illustrating an example computer-implemented method 900 of training an ML model, the computer-implemented method comprising performing either of the methods 700, 800 of Figures 7 and 8, then at step s920 training an ML model using the output solution as training data to produce a trained ML model.

In the methods 700, 800 of Figures 7 and 8, the plurality of vectors can relate to network security and/or management, in which case the example computer-implemented method 1000 of configuring a network illustrated by the flowchart of Figure 10 can be implemented. At step s1020 a network configuration action is determined based on the solution output by either method 700 or 800. Then that network configuration action is caused to be performed at step s1040, for example by initiating an automatic network configuration action and/or by prompting a human user to perform a manual network configuration action. Determining the network configuration action at step s1020 can optionally be performed using the trained ML model output by the method 900 of Figure 9.

Where the vectors relate to network security, they could for example represent threat reports detailing emerging malware threats, or network traffic data. In the former case the network configuration actions could be preventative measures to inoculate a network against an emerging threat. In the latter case, the network configuration actions could be mitigation measures to reduce the damage caused by a suspected infection, e.g. identified via anomaly detection.

The proposed clustering methods could alternatively be used to inform real-time resource allocation to and/or control of robotic systems such as drones. For example, if a fleet of drones with differing capabilities is required to perform inspection of a wide area, it is desirable to allocate drones to sub-areas such that each sub-area can be adequately inspected. Clustering can be used to inform a suitable allocation.

### Suitable data processing system

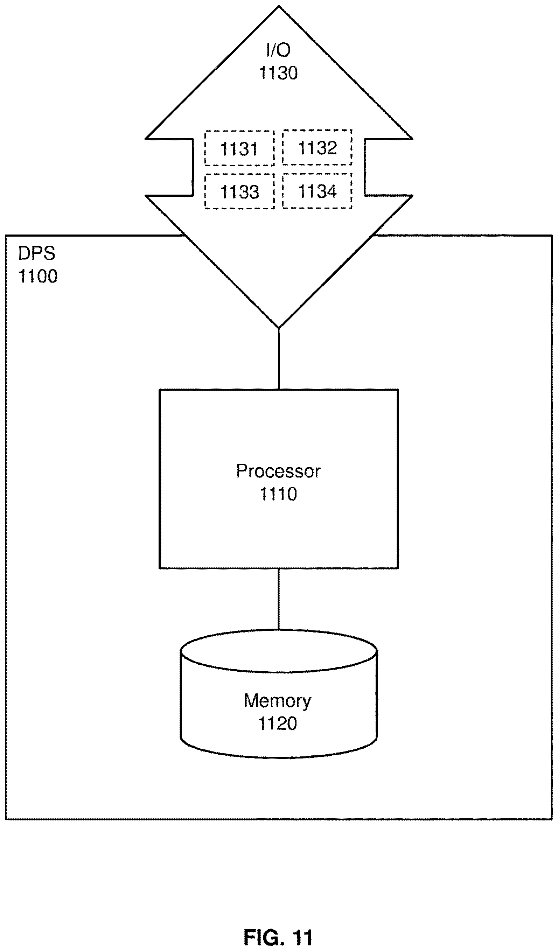

Figure 11 schematically illustrates an example data processing system (DPS) 1100 capable of performing any of the methods described above. It comprises a processor 1110 operably coupled to both a memory 1120 and an interface (I/O) 1130.

The memory 1120 can optionally comprise computer program instructions which, when the program is executed by the processor 1110, cause the data processing system 1100 to carry out any of the methods described above. Alternatively or additionally, the interface 1130 can optionally comprise one or both of a physical interface 1131 configured to receive a data carrier having such instructions stored thereon and a receiver 1132 configured to receive a data carrier signal carrying such instructions.

The receiver 1132, when present, can be configured to receive messages. It can comprise one or more wireless receiver modules and/or one or more wired receiver modules. The interface 1130 can optionally comprise a transmitter 1133 configured to transmit messages. The transmitter 1133, when present, can comprise one or more wireless transmitter modules and/or one or more wired transmitter modules.

The interface 1130 can optionally comprise one or more user interface devices 1134.

### ML elements

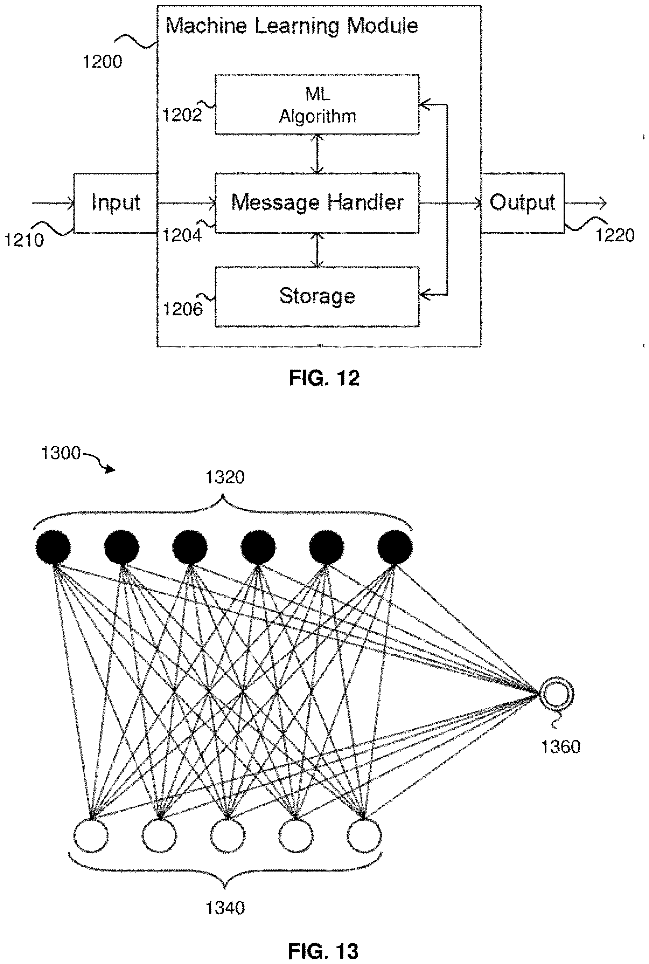

Figure 12 is a component diagram of an example ML module 1200 which can be used to perform the ML tasks described above. The ML module 1200 is a discrete software module in that it is individual, separate and/or distinct and preferably portable in the sense that the module 1200 can be stored and/or transmitted for execution in potentially multiple execution environments such as physical or virtual computer systems or software platforms executing in a computer system such as runtime environments, operating systems, platform software and the like. The module 1200 encapsulates functionality and data storage and can be implemented, for example, as an object or instantiable class in an object-oriented environment or as a software library having, in execution, access to a memory such as a memory heap.

The ML module 1200 comprises an executable ML algorithm 1202 such as any of the ML algorithms hereinbefore described or other suitable ML algorithms as will be apparent to those skilled in the art. Suitable ML algorithms are configurable to execute within the scope of the module 1200 based on input parameters including, for example, domain data and/or configuration parameters as an input for the algorithm 1202 to generate an ML result such as range data and/or other output data. For example, the ML algorithm 1202 can be provided as a method of a software object or a subroutine, procedure, or function in a software library. Thus, the ML algorithm 1202 is executable to perform ML functions including any or all of: a training phase of operation for training the algorithm 1202 where the algorithm 1202 is supervised or semi-supervised; and/or a processing phase of operation of the algorithm for providing one or more ML results.

In conjunction with the ML algorithm 1202, and accessible to the algorithm 1202, the module 1200 further comprises a storage 1206 as a data store for the storage of data by the algorithm 1202. The storage 1206 can be a volatile or non-volatile storage such as a memory, and is encapsulated by the ML module 1200 either or both by a declaration, definition, specification or representation of the ML module 1200 (such as a software class definition or serialised software component) or by a manner of execution of the module 1200 at runtime such as by a memory heap or other memory structure suitable for allocation at runtime for constituting the storage 1206 in association with the module 1200. Thus, the storage 1206 is used, inter alia, by the algorithm 1202 for the storage of data required by the algorithm such as ML parameters, ML results, ML data structures including representations of ML models such as, inter alia: tree data structures; representations of regression analysis data structures; representations of neural network data structures; variables; and any other data that may be stored by the ML algorithm 1202. Thus, in this way, the ML module 1200 provides a discrete encapsulation of an ML algorithm 1202 and data required for and by the algorithm 1202 within a single module 1200.

The ML module 1200 further comprises an interface for communication external to the module 1200 that is the mechanism through which the algorithm 1202 communicates with components and/or entities outside the module 1200. The interface can be generalised as comprising an input interface 1210 and an output interface 1220 that can be defined and/or configured together, and which are connected by a message handler 1204 operably connected to the ML algorithm 1202 and the storage 1206. The input 1210 provides a mechanism through which input data can be communicated to the ML module 1200 including input for the algorithm 1202. The output 1220 provides a mechanism through which output data can be communicated by the ML module 1200 including output for the algorithm 1202. For example, ML parameters including configuration information, training data and ML input (domain) information can be communicated via the input 1210 as at least part of input data. Further, for example, ML results such as output data can be communicated via the output 1220 as at least part of output data.

Figure 13 schematically illustrates an example restricted Boltzmann machine (RBM) 1300, which is a stochastic neural network, i.e. a network of neurons where each neuron has some random behaviour when activated. An RBM such as the RBM 1300 can be used to perform the ML tasks described above. The RBM 1300 consists of one layer of visible units 1320, one layer of hidden units 1340, and a bias unit 1360. Each visible unit 1320 is connected to all the hidden units 1340 (this connection is undirected, so each hidden unit 1340 is also connected to all the visible units 1320), and the bias unit 1360 is connected to all the visible units 1320 and all the hidden units 1340. The bias unit 1360 is used to allow other units to learn an appropriate threshold. No visible unit 1320 is connected to any other visible unit 1320 and no hidden unit 1340 is connected to any other hidden unit 1340. After successful learning, an RBM provides a closed-form representation of the distribution underlying the training data. The RBM 1300 is trained to model a joint probability distribution of inputs tokens and corresponding vector embeddings, both represented by the visible units 1320 of the RBM 1300. The hidden units 1340 represent a reduced set of features that, after training, can constitute a set of latent factors. The RBM 1300 works by updating states of some units given the states of others.

Deep learning is a branch of ML which focuses on learning meaningful representations of data. Various deep learning architectures such as deep belief networks, convolutional neural networks, and stacked autoencoders have been applied to fields including natural language processing. Stacked autoencoders can be used to perform the ML tasks described above. An autoencoder is a simple (e.g. 3-layer) artificial neural network composed of, for example, an input layer, a hidden layer, and an output layer. Typically, a number of hidden units (or neurons/nodes) is less than a number of visible (input or output) units. As a result, when data is passed through such a network, it first compresses (encodes) an input vector to "fit" in a smaller representation, and then seeks to reconstruct (decode) it back. For each input x, it is first mapped to a hidden layer y, and an output layer tries to reconstruct x. Training a network seeks to minimise a reconstruction error, i.e. to find a most efficient compact representation (encoding) for input data. Autoencoders are typically trained using backpropagation with stochastic gradient descent. A stacked autoencoder is a neural network consisting of multiple layers of sparse autoencoders in which the outputs of each layer are connected to the inputs of a successive layer. Unsupervised pre-training of a network can be undertaken one layer at a time. Once a first k layers are trained, it is possible to train the (k+1)-th layer using an internal representation (i.e. feature vector) of the k-th layer. The size of feature vector is gradually reduced at each layer. For example, stacked autoencoders can be networked with five layers that compress a number of features from, e.g. 20,000 to 250. During a training phase denoising autoencoders may optionally be used instead of basic autoencoders. A denoising autoencoder adds a stochastic corruption step operating on the input. The idea is to force autoencoders to not learn an identity function, but more robust features, by reconstructing the input from a corrupted version of it. This way an autoencoder needs to capture the statistical dependencies between the inputs to reconstruct a distorted input. To use stacked autoencoders for extracting important features from a data source, all the information collected for each data record in the data source needs to be converted to fixed-size input feature vector. An autoencoder can take an input x ∈ [0,1]^{d} and maps it (with an encoder) to a hidden representation y ∈ [0,1]^{d'}. For example, a binary value is assigned to each input node to indicate whether or not particular information or a particular feature is contained in the data record. An entire (binary) input feature vector provides an uncompressed representation for a record. A size of the input vector depends on the (training) datasets and should be large enough to sufficiently represent a variety of possible feature values contained in different event log sets.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Computing resources, as referred to herein, include electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method of clustering a plurality of vectors, the computer-implemented method comprising:
sorting the plurality of vectors by cosine distance from an origin vector to generate an ordered circular list; and
dividing the ordered circular list into a plurality of ordered list fragments, each ordered list fragment consisting of one or more vectors, thereby generating a solution in which the one or more vectors constituting each of the plurality of ordered list fragments are assigned to a respective one of a corresponding plurality of vector clusters.

2. The computer-implemented method of claim 1, further comprising:
after sorting the plurality of vectors, determining a distance between each of the plurality of vectors and a next one of the plurality of vectors in the ordered circular list;
wherein the dividing is performed to generate *K* ordered list fragments by positioning fragment boundaries to correspond to a top *K* of the determined distances.

3. The computer-implemented method of claim 2, further comprising determining K based on:
a skewness ratio of the distances' distribution, and
a conditional probability of a number of peaks identified in the distances' distribution being equal to a true number of categories of the plurality of vectors, given a total number of topics the plurality of vectors are identified as relating to.

4. The computer-implemented method of any of claims 1 to 3, further comprising:
i. adopting the solution generated by the step of dividing the ordered circular list into a plurality of ordered list fragments as an initial current solution;
ii. obtaining a fitness metric of the current solution;
iii. selecting a next cluster of the plurality of vector clusters;
iv. generating a candidate solution based on the current solution by reassigning an outermost vector of the selected cluster to the cluster of the plurality of vector clusters containing the vector of the plurality of vector clusters other than the selected cluster with the shortest distance from that outermost vector;
v. determining a fitness metric of the candidate solution;
vi. comparing the fitness metric of the candidate solution to the fitness metric of the current solution;
vii-a. when that comparison indicates the current solution to be at least as fit as the candidate solution, retaining the current solution; and
vii-b. when that comparison indicates the candidate solution to be fitter than the current solution, adopting the candidate solution as a revised current solution; then
viii-a. when all clusters of the current solution have been selected, or another termination criterion is met, outputting the current solution;
viii-b. otherwise, returning to step ii.

5. The computer-implemented method of claim 4, wherein any cluster of the current solution whose assigned vectors have not changed for a predetermined threshold number of past iterations since a latest adoption of a current solution can be considered to have already been selected in any future iterations for which that current solution remains adopted.

6. The computer-implemented method of any preceding claim, further comprising:
outputting a representative vector for each cluster of the output solution.

7. The computer-implemented method of any preceding claim,
wherein the plurality of vectors relate to network security and/or management.

8. A computer-implemented method of training a machine learning model, the computer-implemented method comprising:
performing the method of any preceding claim; and
training a machine learning model using the output solution as training data.

9. A machine learning model trained according to the method of claim 8.

10. A computer-implemented method of configuring a network, the computer-implemented method comprising:
performing the method of claim 7;
determining a network configuration action based on the solution output by claim 7; and
causing the network configuration action to be performed.

11. The computer-implemented method of claim 10, wherein the determining of the network configuration action is performed using the machine learning model of claim 9.

12. A data processing system configured to perform the method of any of claims 1 to 8, 10, or 11.

13. A computer program comprising instructions which, when the program is executed by a computer, cause the computer to carry out the method of any of claims 1 to 8, 10, or 11.

14. A computer-readable data carrier having stored thereon the computer program of claim 13.

15. A data carrier signal carrying the computer program of claim 13.
